# EUROPEAN PATENT APPLICATION

(11) **EP 2 937 172 A1**
(43) Date of publication of application: **28.10.2015**
(21) Application number: 14305614.1
(22) Date of filing: 25.04.2014
(51) Int. Cl.: B24B 19/06, B23Q 7/04, B23Q 17/20

(54) **Workpieces processing machine and method for automatically controlling the dimensions of workpieces in such a machine**

(71) Applicant: Aktiebolaget SKF, 415 50 Göteborg (SE)
(72) Inventor: Allin, Eric, 37230 Pernay (FR); Fisseau, Benoit, 37360 Neuille-Pont-Pierre (FR); Kaelin, Alexandre, 41000 Blois (FR); Pellat, Guillaume, 37000 Tours (FR); Proust, Gilles, 37360 Neuille-Pont-Pierre (FR); Rimbault, Gérard, 37360 Semblancay (FR)
(74) Representative: Myon, Gérard Jean-Pierre

(57) **Abstract**

This workpieces processing machine comprises a handling tool (106) for loading a working station of the machine with workpieces (500) to be processed. This machine includes a laser detection cell (650) and computation means configured to compute at least a first dimension (D_{500A}, D_{500B}, D_{500C}, L₅₀₀) of a workpiece (500) on the basis of a position of the handling tool when the workpiece crosses a laser beam (B₆₅₀) of the laser detection cell (650) while being moved by the handling tool in a first direction (D1). The method is for automatically controlling some dimensions (D_{500A}, D_{500B}, D_{500C}, L₅₀₀) of workpieces (500) to be processed in a working station (14) of a machine (2). It includes at least steps consisting in a) picking a workpiece (500) in an inlet station (300) of the machine, b) moving the workpiece with a handling tool (106), in a first direction (D1) towards a laser beam (B₆₅₀) of a fixed laser detection cell (650), c) detecting the position of the handling tool (106) when the workpiece crosses the laser beam (B₆₅₀) along the first direction (D1) and d) computing a dimension (D_{500A}, D_{500B}, D_{500C}, L₅₀₀) of the workpiece on the basis of the position of the handling tool (106) detected at step c).

## Description

### TECHNICAL FIELD OF THE INVENTION

This invention relates to a workpieces processing machine which can be used, for instance, for the grinding of bearing rings and which includes, amongst others, a handling tool for loading a workstation of the machine with workpieces to be processed. This invention also relates to a method for automatically controlling the dimensions of workpieces to be processed in a working station of such a machine.

### BACKGROUND OF THE INVENTION

In the field of manufacturing, it is known that the dimensions of the workpieces to be processed on a machine must be checked in order to avoid processing of a workpiece with wrong parameters of the machine. On some machines, this is implemented via Poka Yoke devices which include a mechanical part installed on a feeding line of a machine and adapted to block workpieces having one dimension larger than the nominal dimension of the workpieces to be processed. Such a Poka Yoke device must be installed for each type of workpiece to be processed on a machine which is time consuming and requires to store Poka Yoke devices not currently used on a machine. Moreover, such a Poka Yoke device generally allows controlling only one dimension of a workppiece, which might not be sufficient to differentiate two types of workpieces.

This is particularly the case in a grinding machine for bearing rings, such as the one known from WO-A-2008/082140, where several bearing rings with the same diameter might be processed, while having different axial length.

This problem also occurs in other processing machines capable of handling different types of workpieces.

### SUMMARY OF THE INVENTION

This invention aims at solving these problems with a new machine which is capable of handling different workpieces, without having to use Poka Yoke devices which need to be changed for every new type of workpiece to be processed.

To this end, the invention concerns a workpieces processing machine comprising a handling tool for loading a working station of a machine with workpieces to be processed, this machine being characterized in that it includes a laser detection cell and computation means configured to compute at least a first dimension of a workpiece on the basis of a position of the handling tool when the workpiece crosses a laser beam of the laser detection cell while being moved by the handling tool in a first direction.

Thanks to the invention, the laser beam of the laser detection cell is used as a reference and the computation means are capable of determining a dimension of a workpiece without having to be changed from one type of workpiece to another.

According to further aspects of the invention, which are advantageous but not compulsory, this machine might incorporate one or several of the following features, taken in any admissible configuration:
- The computation means are configured to compute also a second dimension of the workpiece on the basis of a position of the handling tool when the workpiece crosses the laser beam while being moved by the handling tool in a second direction.
- The handling tool is mounted on a multi-axis robot, preferably a six-axis robot.
- The handling tool is a clamp provided with means for gripping the workpiece.
- The machine is a grinding machine is for bearing rings and the dimension computed by the computing means is a diameter or an axial length of a bearing ring.

The invention also relates to a method which can be implemented with a machine as mentioned here-above for automatically controlling the dimensions of some workpieces to be processed in a working station of this machine. This method includes at least the following steps consisting in:
a) picking a workpiece in an inlet station of the machine,
b) moving the workpiece with a handling tool, in a first direction towards a laser beam of a fixed laser detection cell,
c) detecting the position of the handling tool when the workpiece crosses the laser beam along the first direction and
d) computing a dimension of the workpiece on the basis of the position of the handling tool detected at step d).

According to further aspects of this method, it might incorporate one or several of the following features taken in any admissible configuration:
- The computation of step d) is based on a distance between the laser beam and a part of the handling tool in contact with the workpiece.
- The method includes further steps implemented prior to step d) and consisting in e), moving the workpiece with the handling tool in a second direction towards the laser beam and f) detecting the position of the handling tool when the workpiece crosses the laser beam along the second direction, whereas the computation of step d) is based on a distance between the positions of the handling tool respectively detected at steps c) and f).
- The method is implemented on a grinding machine, the workpieces are bearing rings and the dimension computed at step d) is a diameter or an axial length of a bearing ring.
- A diameter of the bearing ring is computed at step d) on the basis of the distance between the laser beam and the part of the handling tool in contact with the workpiece.
- Several diameters of the bearing ring are computed on the basis of several positions of the handling tool when the bearing ring crosses the laser beam along different directions.
- An axial length of the bearing ring is computed at step d) as the distance between the two positions is respectively detected at steps c) and f).
- The position of the handling tool is detected by sensors coupled to driving actuators of the handling tool.

### BRIEF DESCRIPTION OF THE DRAWINGS

The invention will be better understood on the basis of the following description which is given in correspondence with the annexed figures and as an illustrative example, without restricting the object of the invention. In the annexed figures:
- figure 1 is a front view of a grinding machine according to the invention,
- figure 2 is a partial perspective view corresponding to detail II on figure 1,
- figure 3 is a partial top view of the machine of figures 1 and 2 where the arm of a multi-axis robot is not represented, for the sake of clarity.
- figure 4 is a partial cut view along line IV-IV on figure 3 when the machine is in a first working configuration, the arm of the multi-axis robot being also non represented and
- figures 5 to 9 are cut views similar to figure 4 when the machine is in some other working configurations.

### DETAILED DESCRIPTION OF SOME EMBODIMENTS

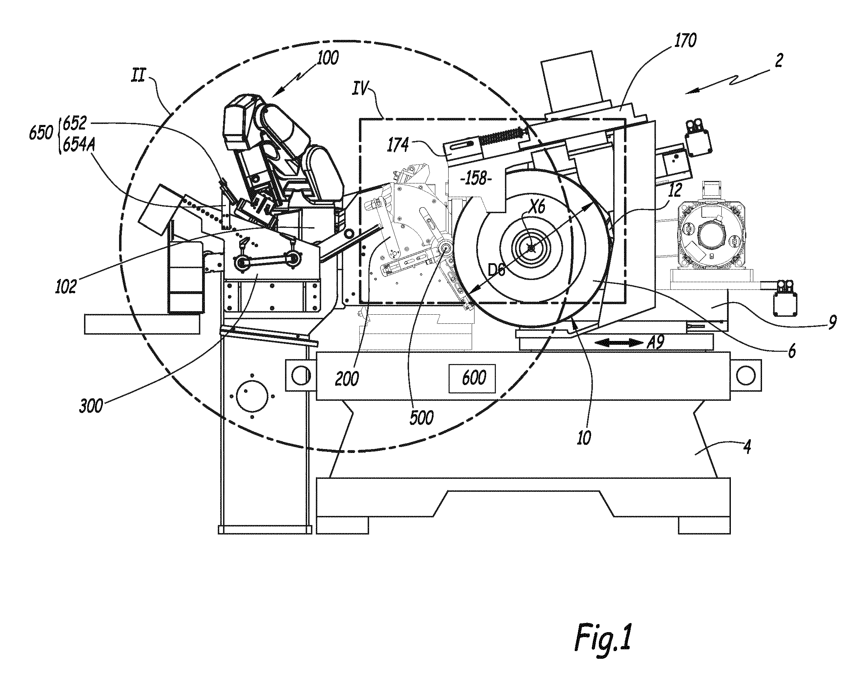

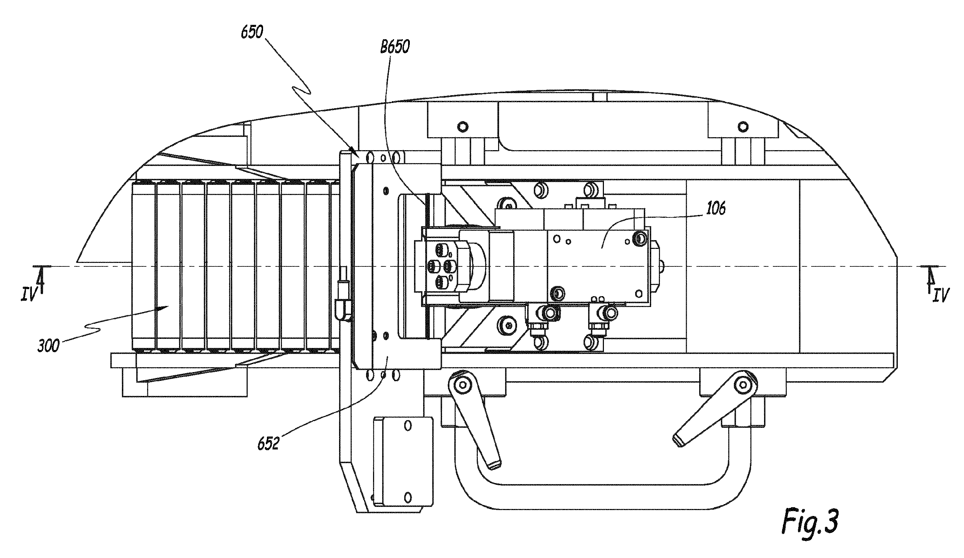

The grinding machine 2 represented on figures 1 to 9 includes a frame 4 and a rotating grinding wheel 6 which rotates around a first rotation axis X6. An electric motor 8 is used to drive wheel 6 in rotation around axis X6. D6 denotes the outer diameter of grinding wheel 6.

Grinding wheel 6 and motor 8 are supported by an auxiliary frame 9 which is movable with respect to frame 4 in two opposite directions perpendicular to axis X6, as shown by double arrow A9 on figure 1. Axis X6 is fixed with respect to auxiliary frame 9.

The outer peripheral surface 10 of grinding wheel 6 is shaped by a knurl 12 when needed and is used to grind the outer surface of an inner ring 500 of a non-further represented bearing. Knurl 12, which is sometimes called "diamant roller", is also supported by auxiliary frame 9. In the example of the figures, outer surface 10 has a central bump, so that it is used to grind the outer radial surface 502 of ring 500 with a concave groove.

Grinding machine 2 is provided with a working station or zone 14 where each ring 500 is successively held in position with respect to grinding wheel 6 during a grinding operation.

Working station 14 includes two support shoes 16 and 18, each provided with a fitting 20, respectively 22. Fitting 20 is adapted to lie against the outer radial surface of a magnetic clamp 24, whereas fitting 22 is made of two parts and adapted to lie against the outer peripheral surface 502 of ring 500. Each support shoe 16 and 18 is mounted on a slider 26, respectively 28. Another slider 30 is used to avoid escape of the ring 500.

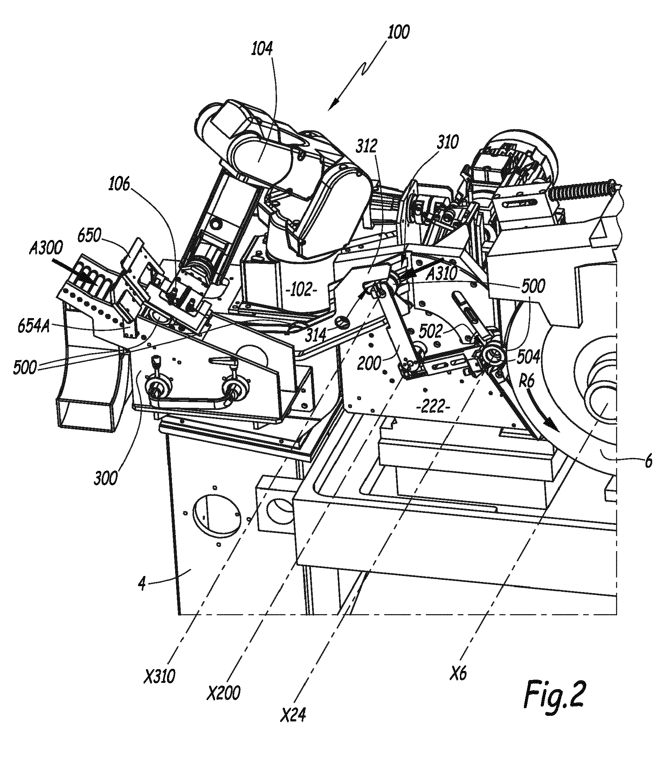

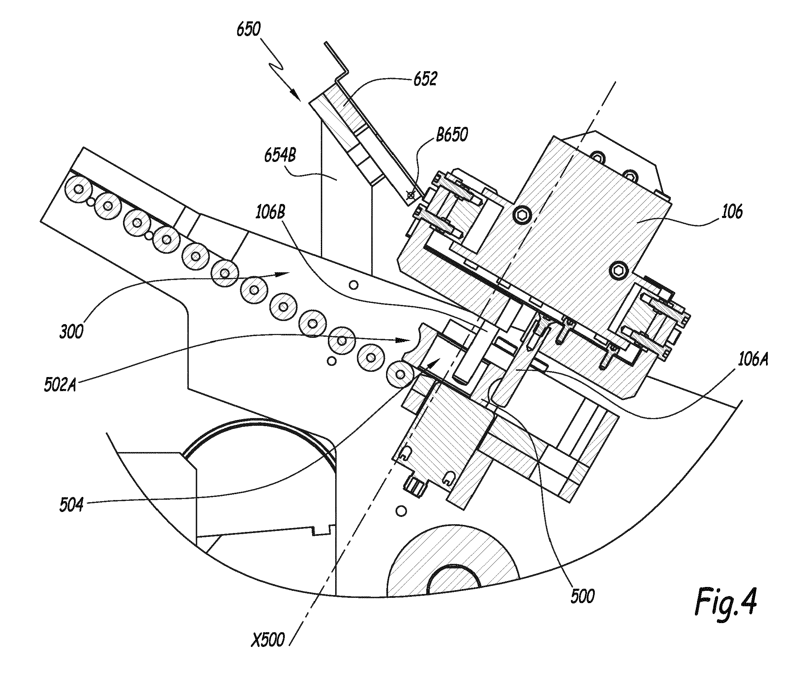

When it is loaded in working station 14, as shown on figures 1 and 2, each ring 500 is centered around a central axis X24 of magnetic clamp 24 parallel or substantially parallel to axis X6. In this configuration, the central bore 504 of ring 500 is empty and, because of the friction between surfaces 10 and 502, ring 500 is driven in rotation around axis X24 by the rotation movement of grinding wheel 6 around axis X6. On figure 4, arrow R6 represents the rotation of grinding wheel 6 and arrow R500 represents the rotation of ring 500.

Two types of equipment are used to feed working station 14 with rings 500 and to evacuate the rings from this working station, once they have been processed. In this description, a ring which is not yet processed is called a "black ring", whereas a ring which has been processed by grinding wheel 6 is called a "ground ring".

A multi-axis robot 100, with 6 degrees of freedom, belongs to the transfer means. It is mounted by its base 102 on the frame 4 of grinding machine 2 and includes a multi-articulated arm 104 whose free end is equipped with a clamp 106 adapted to grasp or grip different types of rings 500, via a proper programming of robot 100.

A moving arm 200 also belongs to the transfer means. This moving arm is rotatable around an axis X200 which is fixed with respect to frame 4 and parallel to axis X6. Near its free end 204 opposite to axis X200, moving arm 200 is provided with means for gripping a ring 500 to be moved away from working station 14. This gripper 206 allows temporally gripping a ring 500.

Grinding machine 2 includes an inlet chute 300 where black rings 500 move by gravity in the direction of arrow A300. For the sake of simplicity, only one ring 500 is represented in inlet chute 300 on figure 2. Inlet chute 300 is close to robot 100 which can pick-up a ring 500 present in inlet chute 300 when needed.

On the other hand, grinding machine 2 also includes an outlet chute 310 where ground rings 500 are dumped, one after the other. In outlet chute 310, ground rings 500 move by gravity, in the direction of arrow A310. On its side oriented towards arm 200, outlet chute 310 is equipped with a releaser 312 provided with a notch 314 of a size sufficient to accommodate the gripping means of moving arm 200 but with a transverse dimension, measured between two lateral edges of this notch, smaller than the outer diameter of the rings 500.

Grinding machine 2 includes an electronic control unit or ECU 600 which is schematically represented on figure 1 only and which is adapted to send control signals and receive feedback signals from different parts of grinding machine 2. For the sake of simplicity, the electric lines between ECU 600 and the other parts of grinding machine 2 are not represented on figure 1. ECU 600 is capable of piloting multi-axis robot 100 and also to know, at each moment, the location of clamp 106 thanks to feedback signals sent by rotation sensors coupled to each driving motor of multi-axis robot 100. ECU 600 is also adapted to control actuation of clamp 106, in particular the relative movement of three fingers which belong to this clamp, two of these fingers being visible on figures 4 to 9 with references 106A and 106B. ECU 600 also receives feedback signals relating to the position of fingers 106A, 106B and equivalent with respect to a basis block of clamp 106. Thus, ECU 600 fully controls multi-axis robot 100 and clamp 106 and is capable of knowing, at each moment, the location of fingers 106A and 106B. ECU 600 includes a microcontroller, so that it can perform computing operations.

A laser detection cell 650 is mounted on inlet chute 300 and includes a U-shaped frame 652 and two posts 654A, 654B for holding frame 652 with respect to two lateral walls of inlet chute 300. A laser beam B₆₅₀ extends between the two lateral legs of frame 652. Laser detection cell 650 is connected to ECU 600 and capable of sending to ECU 600 output signal S₆₅₀ when laser beam B₆₅₀ is interrupted by an obstacle, so that ECU 600 knows when laser beam 650 is being interrupted.

When a black bearing ring 500 is picked up within inlet chute 300, as shown in figure 4, finger 106A is introduced within the central bore 504 of bearing ring 500 and finger 106B comes into contact with the outer radial surface 502 of bearing ring 500.

Actually, as shown on figures 4 to 9, outer surface 502 defines an outer groove 502A and two cylindrical surfaces 502B and 502C which are located on either side of groove 502A along a central axis X500 of bearing ring 500. On the other hand, 506A and 506B denote two axial surfaces of ring 500 which are perpendicular to axis X500.

D_{500A} denotes the outer diameter of ring 500 at the level of the bottom of groove 502A. D_{500B} and D_{500C} respectively denote the outer diameters of ring 500 at the level of surfaces 502B and 502C. L₅₀₀ denotes the axial length of ring 500 measured between surfaces 506 and 5063B, along axis X500.

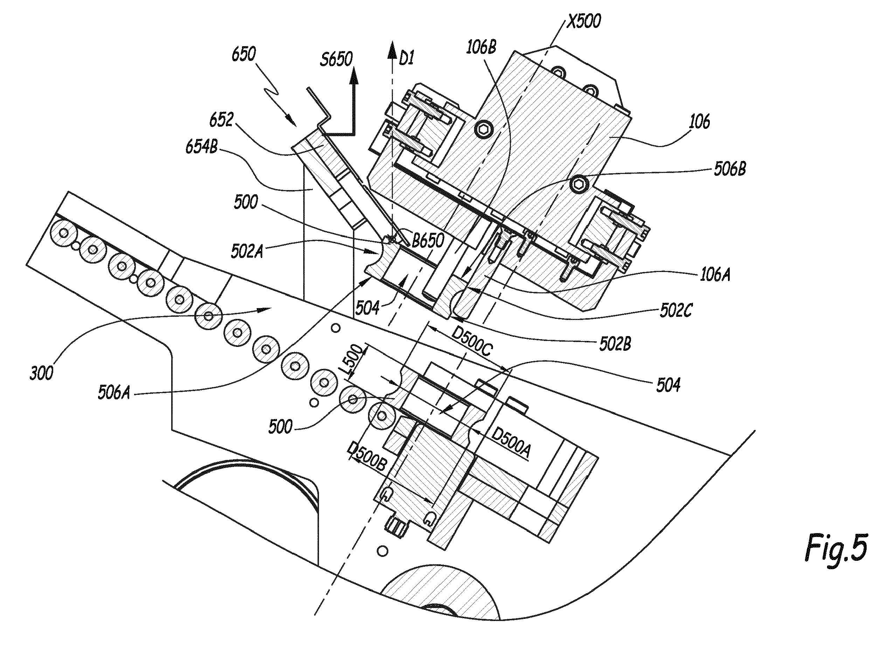

When multi-axis robot 100 picks up a black bearing ring 500 to be processed in working station 14 of machine 2, it is essential to be sure that dimensions D_{500A}, D_{500B}, D_{500C} and L₅₀₀ correspond to the ones for which the working parameters of grinding machine 2 have been set up. Thus, multi-axis robot 100 and laser detection cell 650 are used to verity that these parameters are correct. To this end, bearing ring 500 is moved along a direction D1 up to when it reaches the configuration of figure 5 where axial surface 506B of ring 500 crosses laser beam B₆₅₀.

When this occurs, a corresponding signal S₆₅₀ is sent by cell 650 to ECU 600 which knows the instantaneous position and configuration of clamp 106 thanks to the feedback signals sent by the sensors of multi-axis robot 100 and clamp 106.

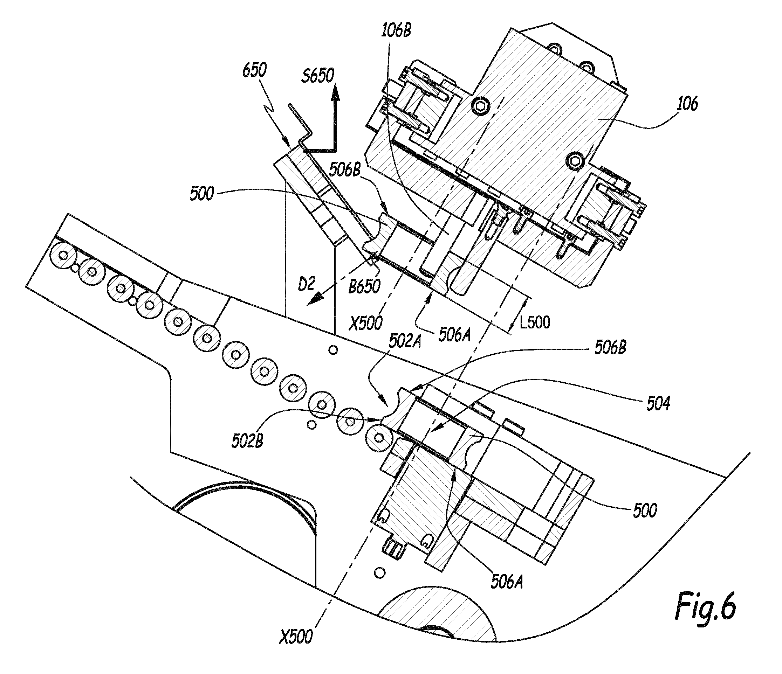

Thereafter, multi-axis robot 100 moves ring 500 away from laser beam B₆₅₀ and, afterwards, multi-axis robot 100 moves bearing ring 500 once again towards laser beam B₆₅₀, this time along a second direction D2, as shown on figure 6. When axial surface 506A crosses laser beam B₆₅₀, this is detected by laser detection cell 650 which warns ECU 600 via another output signal S₆₅₀, as in the configuration of figure 5. ECU 600 knows the position and configuration of clamp 106 when this occurs, as explained here-above.

Thus, ECU 600 is capable of comparing the two positions of clamp 106 in the configuration of figure 5 and in the configuration of figure 6, that is when bearing ring 500 crosses laser beam B₆₅₀ along the two different directions D1 and D2. It is then possible for ECU 600 to compute a difference between these two positions along an axis parallel to axis X500 of the ring 500 supported by clamp 106, this difference being actually equal to length L₅₀₀. Thus, the passage of clamp 106 in the positions of figures 5 and 6 allows determining the axial length L₅₀₀ of bearing ring 500.

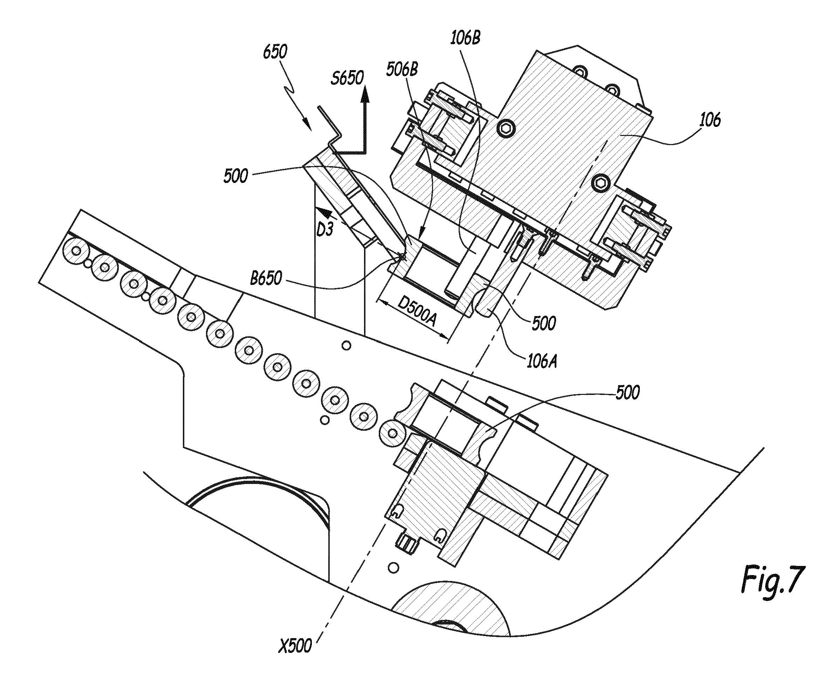

On the other hand, multi-axis robot 100 can be used to move clamp 106 to the position of figure 7 where bearing ring 100 is moved along another direction D₃ so that the bottom of groove 502A crosses laser beam B₆₅₀. When this occurs, laser detection cell 650 sends an output signal S₆₅₀ for warning ECU 600 which knows the location and configuration of clamp 106 at this moment. In particular, ECU 600 knows the location of finger 106A. On the other hand, the location of laser beam B₆₅₀ in the environment of clamp 106 is known to ECU 600. Thus, ECU 600 can compute the distance between laser beam 650 and finger 106A in the position of figure 7, which allows ECU 600 to compute diameter D_{500A}.

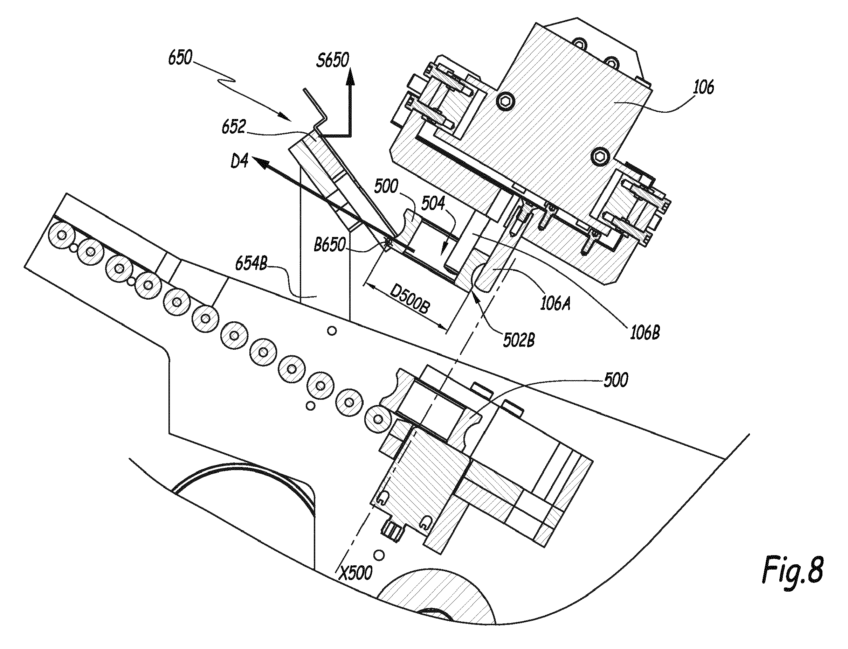

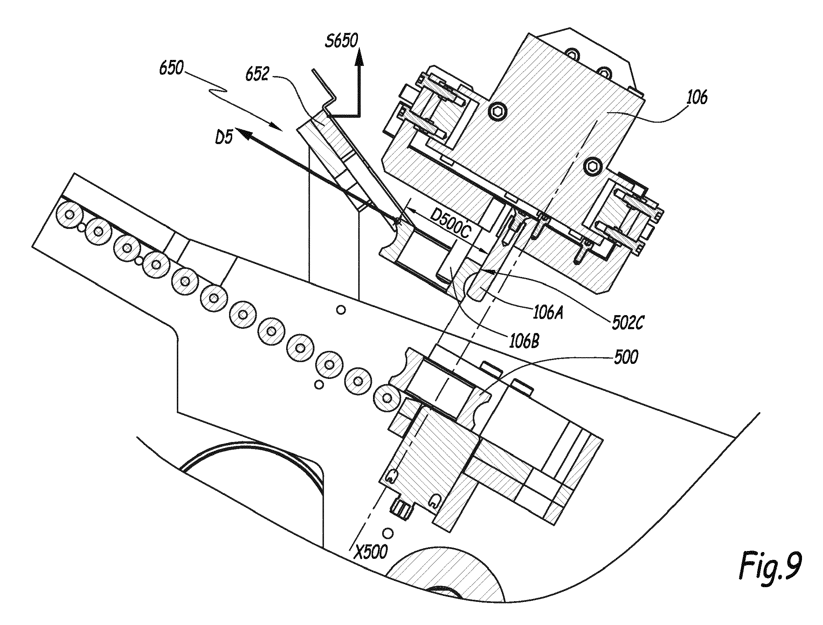

The same approach is used in the configurations of figures 8 and 9 where bearing ring 500 is moved along directions D4 and D5, which allows computing of diameters D_{500B} and D_{500C}, respectively.

On figures 5 to 9, a second black bearing ring 500 is represented in chute 300 when the first one is being checked by the interaction of robot 100 with laser detection cell 650. Actually, several second black bearing rings can be present in chute 300 and ready to be picked up by clamp 106.

Thanks to the invention, several dimensions D_{500A}, D_{500B}, D_{500C} and L₅₀₀ of a bearing ring 500 can be checked before this ring is fed to the working station 14 of grinding machine 2. The successive checks, implemented in the steps corresponding to the configuration of figures 5 to 9, can occur in concurrent operation time, while another bearing ring is being processed in working station 14.

The order of the steps respectively represented by the configuration of figures 5 to 9 can be changed.

Once dimensions D_{500A}, D_{500B}, D_{500C} and L₅₀₀ have been determined by ECU 600, as explained here-above, they can be compared to reference values representative of the bearing rings to be processed in machine 2 with its current settings. Depending on the result of the comparison, a bearing ring 500 which has been checked is moved to working station 14 or not.

No change has to be done to items 600 and 650 to handle different types of workpieces insofar as the handling of bearing rings of different dimensions is fully implemented through the computations made in electronic control unit 600.

The invention is explained here-above and represented on the figures in case it is used for a grinding machine for bearing rings, which is a particularly interesting embodiment of the invention. However, the invention can also be implemented with other types of workpieces processing machine where different types of workpieces have to be processed,

## Claims

1. Workpieces processing machine (2) comprising a handling tool (106) for loading a working station (14) of the machine with workpieces to be processed, **characterized in that** the machine includes:
- a laser detection cell (650),
- computation means (600) configured to compute at least a first dimension (D_{500A}, D_{500B}, D_{500C}, L₅₀₀) of a workpiece (500) on the basis of a position of the handling tool when the workpiece crosses a laser beam (B₆₅₀) of the laser detection cell (650) while being moved by the handling tool in a first direction (D1, D2, D3, D4, D5).

2. A machine according to claim 1, **characterized in that** the computation means (600) are configured to compute also a second dimension (D_{500B}, D_{500C}, L₅₀₀, D_{500A}) of the workpiece (500) on the basis of a position of the handling tool (106) when the workpiece crosses the laser beam (B₆₅₀) while being moved by the handling tool (106) in a second direction (D2, D3, D4, D5, D1).

3. A machine according to one of the preceding claims, **characterized in that** the handling tool (106) is mounted on a multi-axis robot (100), preferably a six-axis robot.

4. A machine according to any preceding claim, **characterized in that** the handling tool is a clamp (106) provided with means (1 06A, 106B) for gripping the workpiece (500).

5. A machine according to any preceding claim, **characterized in that** it is a grinding machine (2) for bearing rings (500) and the dimension computed by the computing means is a diameter (D_{500A}, D_{500B}, D_{500C}) or an axial length (L₅₀₀) of a bearing ring.

6. Method for automatically controlling some dimensions (D_{500A}, D_{500B}, D_{500C}, L₅₀₀) of workpieces (500) to be processed in a working station (14) of a machine (2), **characterized in that** it includes at least the following steps consisting in:
a) picking (fig. 4) a workpiece (500) in an inlet station (300) of the machine,
b) moving (fig. 5-9) the workpiece with a handling tool (106), in a first direction (D1-D5) towards a laser beam (B₆₅₀) of a fixed laser detection cell (650),
c) detecting the position of the handling tool (106) when the workpiece crosses the laser beam along the first direction and
d) computing a dimension (D_{500A}, D_{500B}, D_{500C}, L₅₀₀) of the workpiece on the basis of the position of the handling tool detected at step c).

7. A method according to claim 6, **characterized in that** the computation of step d) is based on a distance between the laser beam (B₆₅₀) and a part (1 06a) of the handling tool (106) in contact with the workpiece (500).

8. A method according to claim 6, **characterized in that**
it includes further steps implemented prior to step d) and consisting in:
e) moving (fig. 6) the workpiece (500) with the handling tool (106) in a second direction (D2) towards the laser beam (B₆₅₀),
f) detecting the position of the handling tool when the workpiece crosses the laser beam along the second direction and
**in that** the computation of step d) is based on a distance between the positions of the handling tool respectively detected at steps c) and f).

9. A method according to one of claims 6 to 8, **characterized in that** it is implemented on a grinding (2) machine, the workpieces are bearing rings (500) and the dimension computed at step d) is a diameter (D_{500A}, D_{500B}, D_{500C}) or an axial length (L₅₀₀) of a bearing ring.

10. A method according to claims 7 and 9, **characterized in that** a diameter (D_{500A}, D_{500B}, D_{500C}) of the bearing ring is computed at step d) on the basis of the distance between the laser beam (B₆₅₀) and the part (106A) of the handling tool (106) in contact with the workpiece.

11. A method according to claim 10, **characterized in that** several diameters (D_{500A}, D_{500B}, D_{500C}) of the bearing ring (500) are computed on the basis of several positions (fig. 7-9) of the handling tool (106) when the bearing ring crosses the laser beam (B₆₅₀) along different directions (D3-D5).

12. A method according to claims 8 and 9, **characterized in that** an axial length (L₅₀₀) of the bearing ring (500) is computed at step d) as the distance between the two positions (fig. 5-6) is respectively detected at steps c) and f).

13. A method according to any of claims 6 to 12, **characterized in that** the position of the handling tool is detected by sensors coupled to driving actuators of the handling tool.
